Europäisches Patentamt

European Patent Office

Office européen des brevets

(11) Veröffentlichungsnummer: **0 469 431 A1**

## (12) EUROPÄISCHE PATENTANMELDUNG

(21) Anmeldenummer: **91112287.7**

(22) Anmeldetag: **23.07.91**

(51) Int. Cl.5: **G11B 5/84**, G11B 5/845

(30) Priorität: **01.08.90 DE 4024378**

(43) Veröffentlichungstag der Anmeldung:
**05.02.92 Patentblatt 92/06**

(84) Benannte Vertragsstaaten:
**AT BE DE ES FR GB IT NL**

(71) Anmelder: **BASF Magnetics GmbH**
**Dynamostrasse 3**
**W-6800 Mannheim 1(DE)**

(72) Erfinder: **Koller, Albrecht, Dr.**
**Raidingerstrasse 27/I**
**W-8000 München 70(DE)**

(74) Vertreter: **Karau, Wolfgang, Dr. et al**
**BASF Aktiengesellschaft Carl-Bosch-Strasse 38**
**W-6700 Ludwigshafen(DE)**

(54) **Löscheinrichtung für magnetische Aufzeichnungsträger.**

(57) Ein zuverlässig arbeitendes und preisgünstiges Verfahren zur Löschung von band- oder bahnförmigen bewegten magnetischen Aufzeichnungsträgern während der Aufwicklung besteht darin, daß beim Aufwickeln des Magnetbandes unter konstantem radialen Abstand von der Wickeloberfläche eine Kette von mindestens drei magnetischen Einzelkreisen angeordnet ist, deren Feldorientierung in azimuthaler Richtung laufend um 180° wechselt und wobei mittels einer mechanischen oder elektrischen Steuerung der Abstand der Magnetkette von der Wickeloberfläche konstant gehalten wird.

FIG. 4

Die Erfindung betrifft ein Verfahren zur Entmagnetisierung von bandförmigen bewegten magnetischen Aufzeichnungsträgern, wobei eine auf einen flexiblen unmagnetischen Schichtträger aufgetragene magnetische Dispersion nach der Trocknung einem äußeren magnetischen Feld, bestehend aus einer Kette von magnetischen Einzelkreisen, unterworfen wird.

Üblicherweise wird bei der Herstellung eines magnetischen Aufzeichnungsträgers in einer Gießmaschine beispielsweise mit einem Extrudergießer die magnetische Dispersion auf den unmagnetischen Schichtträger aufgebracht, und dabei werden die magnetischen Pigmente vor der Trocknung der Dispersion in einem Magnetfeld vorzugsweise in Laufrichtung des Schichtträgers ausgerichtet. Eine derartige Vorrichtung ist beispielsweise aus der deutschen Patentschrift 19 07 212 bekannt. Dadurch bedingt, verläßt der magnetische Aufzeichnungsträger mit hoher Remanenz die Begießvorrichtung und muß vor dem Verkauf entmagnetisiert werden.

Zwar besitzen die meisten Geräte zum Aufzeichnen der Information auf einen magnetichen Aufzeichnungsträger eine eigene Löschvorrichtung (Löschkopf), die den Aufzeichnungsträger vor der Aufzeichnung noch einmal einem Entmagnetisierungsprozeß unterwirft, jedoch ist es bei vielen technischen Anwendungen erforderlich, daß der Aufzeichnungsträger im unmagnetischen Zustand im Handel angeboten wird.

So besitzen die meisten Geräte, auf denen Magnetbandkopien hergestellt werden, keine Löscheinrichtung. Dies hat zur Folge, daß bei schlecht gelöschtem Masterband die Kopie verzerrte Signale und bei den Signalpausen erhöhtes Rauschen trägt. Eine gute Löschung vor Aufzeichnung ist also unerläßlich.

Es gibt zahlreiche Vorschläge, wie in den Gießmaschinen nach dem Trocknen die Aufzeichnungsträger entmagnetisiert werden können. Beispielsweise ist aus der DE-PS 22 61 450 bekannt, unterhalb der aus der Trocknungseinrichtung ablaufenden Magnetbahn eine Kette von magnetischen Einzelkreisen anzubringen, deren Feldrichtung fortwährend wechselt und deren Abstand von der Magnetbahn monoton zunimmt. Eine derartige Vorrichtung verursacht jedoch Probleme beim Bahnlauf, beispielssweise Reibung und Abrieb wegen der Kraftwirkung der Magnetkette auf die frei gespannte Bahn. Ist der Abstand zwischen Bahn und Magnetkette zu gering, so tritt die beschriebene Anziehung ein, ist sie auf der anderen Seite zu groß, so ist die erwünschte Entmagnetisierung des magnetischen Aufzeichnungsträgers ungenügend.

Ein Löschverfahren aufgrund der Lehre der DE-A-35 41 293 schlägt vor, mit Hilfe eines einmalig einwirkenden magnetischen Gleichfeldes in der "schweren" Richtung der magnetischen Pigmente zu sättigen und zu löschen, das heißt, senkrecht zur Ausrichtung der magnetischen Pigmente. Ein solches Verfahren verlangt hohe Feldstärken, das heißt teure Magnete, und erzeugt eine kräftige Querremanenz, liefert also keine echte Löschung. Bei geringsten Fehlern in der geometrischen Anordnung der Löschmagnete entsteht eine zusätzliche Längsremanenz im magnetischen Aufzeichnungsträger.

Aus der EP-A-O 232 811 ist ein Verfahren bekannt, während des Aufwickelns eines Magnetbandes zum Glätten der Ränder das Band einem magnetischen Feld auszusetzen. Nach dem Aufwickeln wird der komplette Wickel mit konventionellen aus dem Stand der Technik bekannten Mitteln gelöscht.

Wenn also die Restremanenz bei einem magnetischen Aufzeichnungsträger stört, bleibt nur die nachträgliche Löschung der geschnittenen und aufgewickelten Bahnen in abklingenden Wechselfeldern übrig. Je nach Koerzitivkraftbereich geschieht dies stapelweise in großen Löschdrosseln oder in kleinen Geräten als Einzelbandlöschung. Diese Arbeitsgänge erhöhen die Produktionskosten und erzeugen unter Umständen störende "Löschspeicher", das heißt, Zonen unterschiedlicher Restmagnetisierung. Werden die magnetischen Aufzeichnungsträger auf Metallflansch-Spulen aufgewickelt, bringt dies zusätzliche Probleme. Bei den immer stärker vordringenden Magnetbändern mit Metallpulvern als magnetischen Pigmenten, die eine wesentlich höhere Koerzitivkraft besitzen, ist die Entmagnetisierung noch schwieriger, da die Kosten einer Löschdrossel mit dem Feldvolumen und der Feldamplitude extrem ansteigen.

Deswegen bestand die Aufgabe, ein Verfahren zur Löschung von bandförmigen magnetischen Aufzeichnungsträgern zu finden, welches

- zuverlässig eine gleichmäßige Entmagnetisierung des fertiggestellten magnetischen Aufzeichnungsträgers bewirkt,
- ohne störende Kräfte auf den Bahnverlauf arbeitet,
- preisgünstig, das heißt ohne merkliche Steigerung der Produktionskosten durch zusätzliche Arbeitsvorgänge, arbeitet,
- unabhängig von der Breite des magnetischen Aufzeichnungsträgers diesen ohne die Gefahr des Auftretens von Löschspeichen entmagnetisiert.

Erfindungsgemäß wurde die Aufgabe gelöst mit einem Verfahren mit den im kennzeichnenden Teil des Anspruchs 1 genannten Merkmalen. Nähere Einzelheiten der Erfindung sowie bevorzugte Ausführungsformen des erfindungsgemäßen Verfahrens gehen aus den Unteransprüchen, der Beschreibung und den Zeichnungen hervor.

Im Folgenden wird die Erfindung anhand der Zeichnungen näher erläutert, ohne aber die Erfindung auf die dargestellten Beispiele zu reduzieren. Im einzelnen zeigt

Figur 1 einen schematischen Aufbau der Löschvorrichtung zur Durchführung des erfindungsgemäßen Verfahrens

Figur 2 den Feldlinienverlauf in der Magnetkette

Figur 3 den Verlauf der Feldstärke in der Bahnlaufrichtung

Figur 4 eine erfindungsgemäße Anordnung zur Durchführung des Löschverfahrens

Figur 5 eine weitere Anordnung zur Durchführung des erfindungsgemäßen Löschverfahrens

Figur 6 eine weitere Anordnung zur Durchführung des erfindungsgemäßen Löschverfahrens.

Das Wesen der Erfindung besteht darin, daß an einer beliebigen Aufwickelstation - beispielsweise an der Gießmaschine nach der Trocknungsstrecke oder an der Trennmaschine nach dem Längsschneiden des magnetischen Aufzeichnungsträgers in die Gebrauchsbreite - eine Kette von mindestens drei magnetischen Einzelkreisen, im einfachsten Fall also eine Doppelspalt-Anordnung aus drei Magneten, vorzugsweise aus Permanentmagneten, angebaut wird, die sich mit wachsendem Wickeldurchmesser unter konstantem Abstand zur Wikkeloberfläche radial von der Wickelachse entfernt. Auf diese Weise durchläuft jede Stelle des magnetischen Aufzeichnungsträgers oftmals einen Umschaltbereich mit Feldlinien, die in der "leichten" Richtung des magnetischen Aufzeichnungsträgers verlaufen. Die Feldstärken können also relativ niedrig bleiben. Die jeweils neu gebildete und aufgewickelte Lage erfährt maximale Schaltfelder; da diese Lage durch weitere neugebildete Lagen sich vom Magneten langsam entfernt, wirken kontinuierlich abnehmende Schaltfelder je nach Feldabfall vor den Spalten. Es herrschen also fast ideale Löschverhältnisse wegen der zahlreichen Flusswechsel abnehmender Stärke; der Endzustand ist dem Energieminimum benachbart.

Um eine gleichmäßige Entmagnetisierung des magnetischen Aufzeichnungsträgers zu erzielen, ist eine absolut verkantungsfreie Führung der Magnetkette in Bezug auf die Wickeloberfläche, deren Krümmung sich mit zunehmendem Wickelradius ändert, erforderlich. Die an der geometrischen Mitte der Magnetkette angelegte Tangente muß stets parallel zur Tangente an der gegenüberliegenden Stelle der Wickeloberfläche (6) sein, was in den Ausführungsbeispielen auf verschiedene Weise erreicht wird.

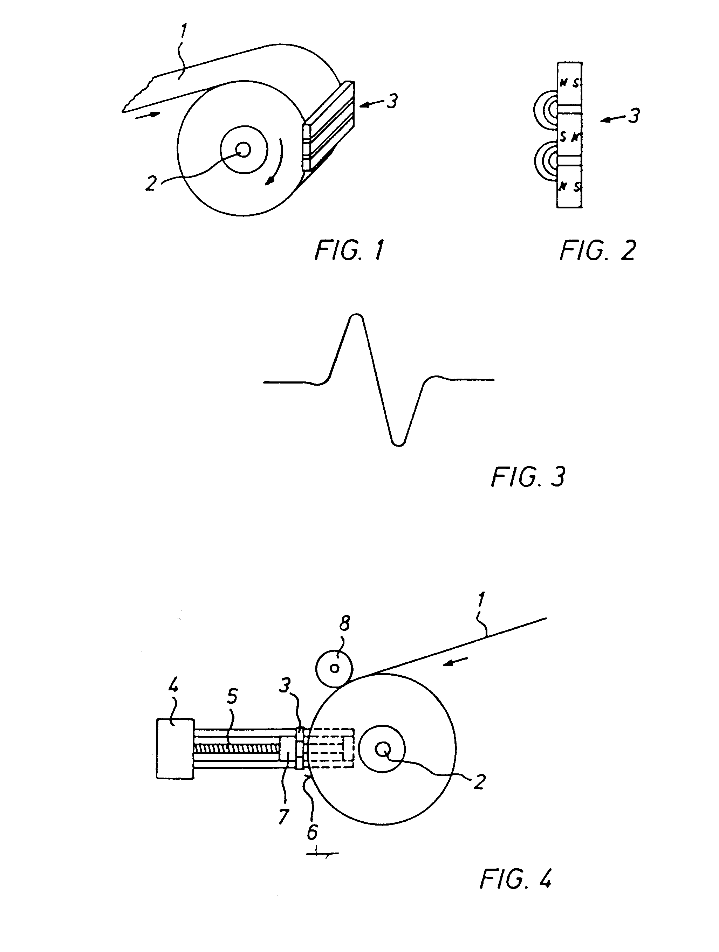

Die Figur 1 zeigt, wie eine von der Gießmaschine oder der Trennvorrichtung kommende Bahn (1) auf einer Achse (2) aufgewickelt wird und dabei mit einer erfindungsgemäßen Magnetanordnung (3) beaufschlagt wird. Die magnetische Anordnung besteht, wie die Figur 2 zeigt, aus einer Kette von mindestens drei quaderförmigen Permanentmagneten, zwischen denen sich schmale unmagnetische Bezirke befinden. Als Materialien für die Magnete sind Bariumferrit, CoSm oder FeNdB oder andere, je nach Anforderung an die Feldstärke, geeignet. Es entsteht der aus Figur 2 und 3 ersichtliche Feldverlauf im wesentlichen in Bahnlaufrichtung. Die Feldorientierung der Magnetkette wechselt in azimutaler Richtung laufend um 180°. Da, wie bereits oben ausgeführt, die Magnetkette mit wachsendem Wickeldurchmesser laufend radial von der Achse weggeführt wird, nimmt die Feldstärke am Ort einer bestimmten Lage in beiden Richtungen monoton bis Null ab.

Anhand der Figuren 4 bis 6 werden nun drei geeignete Anordnungen zur Durchführung des erfindungsgemäßen Verfahrens beschrieben.

Die Figur 4 zeigt eine Anordnung mit elektromechanischer Steuerung für den Löschmagneten. Die ankommende Magnetbahn (1) wird auf einem Wickelkern mit der angetriebenen Achse (2) aufgewickelt und durch eine Andruckrolle (8) an den Wickel gedrückt. Die Magnetkette (3) befindet sich radial verschiebbar auf einem Schlitten (7), welcher eine gleitende Führung des Magneten ohne die Gefahr von Verkanten gewährleistet. Die Magnetkette sitzt auf einer Spindelwelle (5), welche von einm Schrittmotor (4) gesteuert wird. Dieser bekommt seinen Impuls über einen (nicht gezeichneten) Abstandsfühler, bestehend aus einer Luftdüse, einem Blasdruckmesser und einem Grenzwertgeber. Die starr mit dem Magneten (3) gekoppelte Luftdüse bläst Luft auf die Wickeloberfläche (6) und der gemessene Luftdruck ändert sich mit Variation des Abstandes zwischen Magnet und Wikkeloberfläche proportional zur Größe des aufgewickelten Magnetbandes. Ein mit dem Luftdruckmesser verbundener Grenzwertgeber steuert dann den Schrittmotor, welcher dafür sorgt, daß der Abstand Magnetketten (3)-Wickeloberfläche (6) immer konstant bleibt.

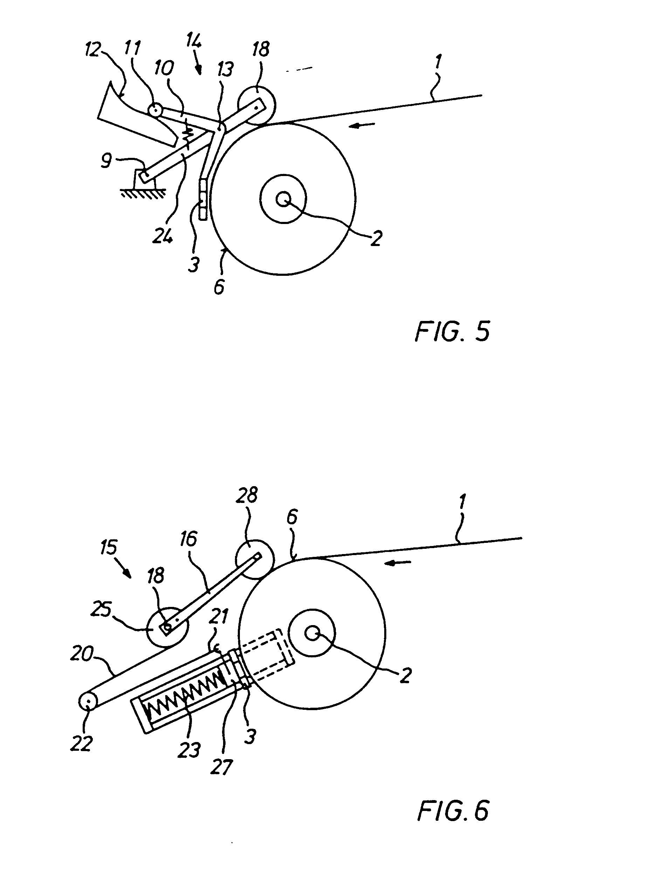

Die Figur 5 stellt eine Hebelsteuerung (14) dar, mittels derer ebenfalls der Abstand Magnetkette-Wickeloberfläche konstant gehalten wird. Die Hebelsteuerung besteht aus einem einarmigen Hebel (24) mit dem Drehpunkt (9), an dessen freiem Ende eine Rolle (18) an der Wickeloberfläche aufliegt. Ein zweiarmiger starrer Hebel (10) läuft mit seinem einen Ende über eine Rolle (11) auf einer gekrümmten Ebene (12) ab, während am anderen Ende des zweiarmigen Hebels die Magnetkette (3) befestigt ist. Der Drehpunkt (13) des Hebels (10) befindet sich auf dem vorher beschriebenen einarmigen Hebel (24) und wird von diesem geführt.

Die Figur 6 zeigt eine Seilzugsteuerung (15) zur Konstanthaltung des Abstandes Magnetkette-Wickeloberfläche. Die Anordnung besteht aus einem einarmigen Hebel (16), an dessen freiem Ende eine Andruckwalze (28) auf der Wickeloberfläche (6) aufliegt. Der Drehpunkt (18) des Hebels ist starr mit einer Kurvenscheibe (25) verbunden. An dieser ist ein Seil (20) befestigt, das über eine Umlenkrolle (22) mit seinem anderen Ende (21) mit der Magnetkette (3) verbunden ist. Diese wird gegen die Kraft einer Andruckfeder (23) durch die Drehbewegung des Hebels (16) und den Zug des Seils (20) auf konstanten Abstand mit der Wickeloberfläche (6) gehalten. Wie in der Figur 4 wird auch hier die Magnetkette (3) mittels eines Schlittens (27) verkantungsfrei geführt.

Für jeden Fachmann ist ganz offensichtlich, daß abgewandelte Ausführungen der drei verschiedenen Anordnungen sowie Kombinationen dieser Anordnungen zur Durchführung des erfindungsgemäßen Verfahrens ohne weiteres möglich sind.

Beispiel 1

Auf einer Wickeleinrichtung wurde ein auf Halbzoll-Breite (12,7 mm) getrennter magnetischer Aufzeichnungsträger aufgewickelt, bestehend aus einem Polyethylentherephthalat-Schichtträger mit einer Dicke von 15 $\mu$m und einer darauf gegossenen magnetischen Aufzeichnungsschicht mit einer Trockenschichtdicke von 3 $\mu$m, deren magnetische Pigmente feinteilige nadelförmige $CrO_2$-Teilchen mit einer Koerzitivkraft von 550 Oe waren. Durch den Gießvorgang befand sich der Aufzeichnungsträger in Sättigungsremanenz in der Beschichtungsebene. Die Wickelgeschwindigkeit betrug 3 m/s. Es wurden drei quaderförmige Bariumferrit-Permanentmagnete mit einer Länge von 25 mm und mit einer Breite von 15 mm verwendet, welche durch zwei quaderförmige harte Kunststoff-Körper mit je 3 mm Breite getrennt waren. In 2 mm radialem Abstand wurden in Bandlaufrichtung axiale Felder von 120 kA/m gemessen, in 10 mm radialem Abstand wirkten noch 28 kA/m. Die an einem radial zu Wickel orientierten Schlitten befestigte Magnetkette wurde in einem Abstand von 2 mm zur Wickeloberfläche gehalten. Zuvor war die Feldsymmetrie mit einer um die Wickelachse drehbaren Hall-Sonde eingestellt worden. Der Verlauf der Feldstärke in Bandlaufrichtung war wie in Figur 3 dargestellt.

Nach Passieren dieser Löschstrecke wurde das aufgewickelte Magnetband auf einer Meßstrecke in Bezug auf Restremanenz durchgemessen. Dabei ergab sich, daß die Restremanenz kleiner als 5 % der Sättigungsremanenz war.

Beispiel 2

In einer Extruder-Gießmaschine mit inline-Kalanderung wurde ein magnetischer Aufzeichnungsträger hergestellt, bestehend aus einer 10 $\mu$m dikken Folie aus Polyethylentherephthalat und einer darauf gegossenen nadelförmiges Metallpulver enthaltenden Magnetschicht. Das Metallpulver besaß eine Koerzitivkraft von 1450 Oe. Die nutzbare Gießbreite war 65 cm, die Gießgeschwindigkeit betrug 320 m/min. Verwendet wurde eine Magnetkette, bestehend aus fünf CoSm-Permanentmagneten mit einer Länge von 67 cm und einer Breite von 20 mm, die jeweils durch 2 mm breite Messingstreifen voneinander getrennt waren. Der radiale Abstand der Magnetkette von der Wickeloberfläche wurde auf 1,5 mm mittels der Anordnung nach Figur 4 konstant gehalten.

Eine Registrierung des Bandrauschens längs der totalen Länge eines Wickels über die gesamte Breite zeigte, daß mit der erfindungsgemäßen Anordnung der Signal/Rausch-Abstand mehr als 60 dB betrug und bei guter Rotationssymmetrie lediglich 5 % der Sättigungsremanenz erhalten wurden.

Die Hystereseverluste bewirkten eine geringe Bremsung des Bandwickels, die aber gegenüber der aufzuwendenden Arbeit gegen den Wickelzug vernachlässigbar war. Durch eine entsprechende Steuerung kann gewährleistet werden, daß bei Fertigstellung des Wickels die Magnetkette während der letzten Umdrehungen des Bandwickels beziehungsweise der Magnetbahn von dieser abgefahren wird, um auch die letzten Lagen sauber zu löschen.

Das erfindungsgemäße Verfahren kann wahlweise bei jedem Produktionsschritt des magnetischen Aufzeichnungsträgers unmittelbar vor dem Verkauf durchgeführt werden, beispielsweise

- nach Beguß, Trocknung und inline-Kalanderung
- nach offline-Kalanderung
- nach dem Schneiden der Bahn in die Gebrauchsbreite
- nach Umrollen zwecks Prüfvorgang des geschnittenen Bandes.

**Patentansprüche**

1. Verfahren zur Entmagnetisierung von bandförmigen bewegten magnetischen Aufzeichnungsträgern, wobei eine auf einen flexiblen unmagnetischen Schichtträger aufgetragene magnetische Dispersion nach der Trocknung einem äußeren magnetischen Feld, bestehend aus einer Kette von magnetischen Einzelkreisen, unterworfen wird, dadurch gekennzeichnet, daß beim Aufwickeln des magnetischen Aufzeichnungsträgers (1) auf einer Achse (2) eine Kette von mindestens drei magnetischen Einzelkreisen (3) unter konstantem radialen Abstand von der Wickeloberfläche (6) angeordnet ist, wobei die Feldorientierung der Magnetkette (3) in azimutaler Richtung laufend um 180° wechselt und wobei die Magnetkette mit wachsendem Wickeldurchmesser laufend radial von der Achse weggeführt wird.

2. Verfahren nach Anspruch 1, dadurch gekennzeichnet, daß die an der geometrischen Mitte der Magnetkette (3) angelegte Tangente stets parallel zur Tangente an der zur Magnetkette gegenüberliegenden Stelle der Wickeloberfläche (6) ist.

3. Verfahren nach Anspruch 1, dadurch gekennzeichnet, daß eine durch einen Schrittmotor (4) gesteuerte Spindelwelle (5) die auf einem Schlitten (7) gleitende Magnetkette (3) auf konstanten Abstand von der Wickeloberfläche (6) hält.

4. Verfahren nach Anspruch 3, dadurch gekennzeichnet, daß der Schrittmotor (4) Impulse durch einen mit der Magnetkette fest verbundenen Abstandsfühler erhält, bestehend aus einer Luftdüse, einem Druckmesser und einem Grenzwertgeber.

5. Verfahren nach Anspruch 1, gekennzeichnet durch eine Hebelsteuerung (14) bestehend aus einem einarmigen Hebel (24) mit dem Drehpunkt (9), dessen freies Ende mit einer Rolle (18) an der Wickeloberfläche (6) aufliegt, über einen zweiarmigen starren Hebel (10), dessen eines Ende mit einer Rolle (11) auf einer gekrümmten Ebene (12) abläuft, dessen Drehpunkt (13) auf dem einarmigen Hebel (24) abläuft und von diesem geführt wird und wobei am anderen Ende des zweiarmigen Hebels die Magnetkette (3) befestigt ist, deren Führung besorgt.

6. Verfahren nach Anspruch 1, dadurch gekennzeichnet, daß eine Seilsteuerung (15), bestehend aus einem einarmigen Hebel (16), dessen freies Ende mit einer Andruckwalze (28) auf der Wickeloberfläche (6) aufliegt und dessen Drehpunkt (18) starr mit einer Kurvenscheibe (25) verbunden ist, an der ein Seil (20) befestigt ist, das über eine Umlenkrolle (22) mit seinem anderen Ende (21) die auf einem Schlitten (27) laufende Magnetkette (3) gegen die Kraft einer Andruckfeder (23) auf konstanten Abstand von der Wickeloberfläche (6) hält.

7. Verfahren nach den Ansprüchen 1 bis 6, dadurch gekennzeichnet, daß die Magnetkette (3) aus quaderförmigen Permanentmagneten mit der Materialzusammensetzung Bariumferrit, CoSm oder FeNdB besteht, welche durch Plastik- oder Messingstreifen von einander getrennt sind.

FIG. 1

FIG. 2

FIG. 3

FIG. 4

FIG. 5

FIG.6

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 481 392 (M.CAMRAS)<br>* Anspruch 1 * *<br>– – – | 1 | G 11 B 5/84<br>G 11 B 5/845 |
| Y,D | DE-A-2 261 450 (AGFA-GEVAERT A G)<br>* Anspruch 1 * *<br>– – – | 1 | |
| A | EP-A-0 121 093 (AGFA-GEVAERT)<br>* Anspruch 1 * *<br>– – – – – | 1 | |

**RECHERCHIERTE SACHGEBIETE (Int. Cl.5)**

G 11 B

**Der vorliegende Recherchenbericht wurde für alle Patentansprüche erstellt**

| Recherchenort | Abschlußdatum der Recherche | Prüfer |
|---|---|---|
| Den Haag | 27 November 91 | VITZTHUM N.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------
& : Mitglied der gleichen Patentfamilie, übereinstimmendes Dokument